# EUROPÄISCHE PATENTSCHRIFT

(11) **EP 4 479 671 B1**
(45) Veröffentlichungstag und Bekanntmachung des Hinweises auf die Patenterteilung: **10.09.2025**
(21) Anmeldenummer: 23703034.1
(22) Anmeldetag: 01.02.2023
(51) Int. Cl.: F16L 53/35, F16L 53/37, F24F 13/02, B64D 13/06, F16L 9/12, F16L 59/14, F16L 59/065

(54) **LUFTVERTEILUNGSEINRICHTUNG MIT ELEKTRISCHER HEIZEINRICHTUNG, LUFTVERTEILUNGSSYSTEM SOWIE VERFAHREN ZUR HERSTELLUNG EINER LUFTVERTEILUNGSEINRICHTUNG**
AIR DISTRIBUTION DEVICE WITH ELECTRIC HEATING MEANS, AIR DISTRIBUTION SYSTEM AND METHOD OF MANUFACTURING AN AIR DISTRIBUTION DEVICE
DISPOSITIF DE DISTRIBUTION D'AIR AVEC DISPOSITIF DE CHAUFFAGE ÉLECTRIQUE, SYSTÈME DE DISTRIBUTION D'AIR ET PROCÉDÉ DE FABRICATION D'UN DISPOSITIF DE DISTRIBUTION D'AIR

(30) Priorität: 14.02.2022 DE 102022103371
(43) Veröffentlichungstag der Anmeldung: 25.12.2024
(73) Patentinhaber: Nord-Micro GmbH & Co. Ohg, 60388 Frankfurt (DE)
(72) Erfinder: AHLBURG, Marc, 85221 Dachau (DE); OSTERMAYER, Josef, 85414 Kirchdorf an der Amper (DE); PÖLLMANN, Markus, 82223 EICHENAU (DE)
(74) Vertreter: Flügel Preissner Schober Seidel
(86) Internationale Anmeldenummer: PCT/EP2023/052429
(87) Internationale Veröffentlichungsnummer: WO 2023/152002

(56) Entgegenhaltungen:
- EP-A1- 2 163 806
- CN-U- 207 729 067
- DE-A1- 102014 018 372
- DE-A1- 102019 123 109
- DE-A1- 19 823 493
- DE-A1- 4 042 056
- US-A1- 2013 028 580

## Beschreibung

Die Erfindung betrifft eine Luftverteilungseinrichtung, insbesondere für die Klimatisierung eines Flugzeuges, mit einem Luftverteilungsrohr und mit einer elektrischen Heizeinrichtung, die in dem Luftverteilungsrohr zur Erwärmung der durch das Luftverteilungsrohr strömenden Luft aufgenommen ist. Weiterhin betrifft die Erfindung ein Luftverteilungssystem mit einer derartigen Luftverteilungseinrichtung sowie ein Verfahren zur Herstellung einer derartigen Luftverteilungseinrichtung.

Bekannte Luftverteilungseinrichtungen der vorstehend genannten Art kommen in Flugzeugen insbesondere bei sogenannten HVAC-Systemen (Heating, Ventilation and Air Conditioning) zum Einsatz. Weiterhin werden diese auch bei Automobilen, Schienenfahrzeugen und bei Gebäudeklimatisierungen eingesetzt.

Bei kommerziellen Flugzeugen erfolgt heutzutage die Temperaturregelung der vorhanden Temperaturzonen (Kabine, Laderaum, Aufenthaltsräume etc.) über die Zumischung von heißer Zapfluft (Trim Air), die aus den Verdichterstufen der Triebwerke entnommen wird.

Weiterhin ist es bekannt, separate Heizgeräte in ein Luftverteilungssystem einzubauen, um die Luft durch das Heizgerät zu fördern und zu erhitzen. Derartige externe Heizgeräte, deren Heizlamellen oder Heizrippen von der Luft durchströmt werden, benötigen ein relativ starkes Gebläse, um den Druckverlust des Heizgerätes zu überwinden. Darüber hinaus weisen derartige externe Heizgeräte ein relativ hohes Eigengewicht auf, was insbesondere bei Flugzeuganwendungen nachteilig ist.

Aus DE 10 2019 123 109 A1 geht eine Heizvorrichtung für eine Fluidleitung, insbesondere für ein Fahrzeug, hervor. Die Heizvorrichtung weist eine elektrische Wärmequelle, einen ersten Wärmeleiter, einen zweiten Wärmeleiter und einen Fluidkanal zur Durchleitung des zu erwärmenden Fluids auf. Der erste Wärmeleiter ist als einstückiger Wärme- und Elektrizitätsleiter ausgebildet, um die Wärme der Wärmequelle abzuleiten und über den Fluidkanal an das zu erwärmende Fluid zu übertragen. Der zweite Wärmeleiter ist als eine dünne Schicht ausgebildet, die innerhalb des Fluidkanals angeordnet ist, wobei dessen Wärmeeinkopplungsfläche zumindest an einem Abschnitt der Innenfläche der Kanalwandung anliegt.

Des Weiteren offenbart DE 10 2014 018 372 A1 eine konfektionierte beheizbare Medienleitung mit einer schlauch- oder rohrförmigen Medienleitung und mit Leitungsverbindern. Zum Beheizen sowohl der rohrförmigen Medienleitung als auch der Leitungsverbinder ist außenseitig auf den beiden Leitungsverbindern und der mit diesen vormontierten rohrförmigen Medienleitung eine elektrisch leitfähige Lackschicht aufgebracht.

Ausgehend hiervon liegt der Erfindung die Aufgabe zugrunde, eine Luftverteilungseinrichtung, ein Luftverteilungssystem und ein Herstellungsverfahren für eine derartige Luftverteilungseinrichtung vorzuschlagen, bei denen die vorstehend beschriebenen Nachteile vermieden werden.

Zur Lösung der Aufgabe wird ein Luftverteilungssystem mit den Merkmalen des Anspruchs 1 und ein Verfahren mit den Merkmalen des Anspruchs 15 vorgeschlagen. Vorteilhafte Ausgestaltungen der erfindungsgemäßen Luftverteilungseinrichtung und des Luftverteilungssystems sind Gegenstand der jeweils abhängigen Ansprüche.

Gemäß einem ersten Aspekt der Erfindung wird eine Luftverteilungseinrichtung, insbesondere für die Klimatisierung eines Flugzeugs, vorgeschlagen. Die Luftverteilungseinrichtung weist mindestens ein Luftverteilungsrohr und eine elektrische Heizeinrichtung auf, die in dem Luftverteilungsrohr zur Erwärmung der durch das Luftverteilungsrohr strömenden Luft aufgenommen ist, wobei das Luftverteilungsrohr einen freien Strömungsquerschnitt aufweist. Das Luftverteilungsrohr besteht aus einem glasfaserverstärkten Kunststoff und weist eine Innenschicht, eine Außenschicht und eine zwischen der Innenschicht und der Außenschicht angeordnete Wärmeisolierungsschicht auf, wobei die Heizeinrichtung in die Innenschicht eingebettet ist. Die Heizeinrichtung ist als Heizelement-Schicht ausgebildet, die in dem Luftverteilungsrohr einlaminiert ist. Die Wärmeisolierungsschicht ist als vakuumierte Wabenstrukturschicht ausgebildet.

Unter einem freien Strömungsquerschnitt wird im Sinne der Erfindung verstanden, dass das Innere des Luftverteilungsrohres frei von Elementen, beispielsweise einer Heizspirale, Heizlamellen und/oder Heizrippen einer Heizeinrichtung, ist. Dadurch wird ein Druckverlust vermieden, da die Luft nicht durch die Heizeinrichtung geführt beziehungsweise gedrückt werden muss.

Da die erfindungsgemäße Heizelement-Schicht an der Innenwand des Luftverteilungsrohrs angeordnet oder in diesem einlaminiert ist, entsteht kein zusätzlicher Druckverlust. Dies führt zu einem geringeren Leistungsbedarf für das Gebläse. Durch die Integration der Heizelement-Schicht in das Luftverteilungsrohr übernimmt das Rohr auch die Funktion des Heizens und der Temperaturregulierung. Weiterhin wird die Anzahl der Komponenten reduziert, wodurch das System vereinfacht wird. Auch wird das System-und Komponentengewicht verringert, was insbesondere bei Flugzeugen sehr wichtig ist. Weiterhin ermöglicht die erfindungsgemäße Luftverteilungseinrichtung ein elektrisches Zonen/und Kabinenheizen ohne Zapfluft aus den Triebwerken.

Durch die Integration einer definierten, elektrischen Heizelement-Schicht in das Luftverteilungsrohr kann das durchströmende Medium, insbesondere Luft, entsprechend auf eine regelbare Temperatur aufgeheizt werden. Das Luftverteilungsrohr übernimmt somit neben der Funktion der Luftverteilung auch die Funktion eines elektrischen, integrierten Heizgeräts. Mit diesem Konzept und dieser Architektur wird kein separates Heizgerät oder keine separate Heizkomponente mehr im Luftverteilungssystem benötigt, um die Luft zu erhitzen und eine Temperaturregelung durchzuführen. Die erfindungsgemäße Luftverteilungseinrichtung mit seinem Luftverteilungsrohr mit einer integrierten Heizelement-Schicht eignet sich besonders für lange Luftverteilungsnetzwerke. Die erforderliche Wärmelast kann über die gesamte vorhandene Rohrlänge definiert und an das Strömungsmedium abgegeben werden.

Da das Luftverteilungsrohr einen freien Strömungsquerschnitt aufweist kann ein Ventilator oder ein Gebläse, welches die Luft durch das Luftverteilungsrohr fördert, kleiner dimensioniert werden, und es muss weniger Druck beziehungsweise Energie aufgebracht werden, um das Medium, insbesondere Luft, durch das Rohrnetzwerk zu transportieren.

Darüber hinaus ist das System- und Komponentengewicht mit der im Luftverteilungsrohr integrierten elektrischen, integrierten Heizelement-Schicht deutlich reduziert im Vergleich zu einem Rohr mit einem separaten Heizgerät. Insbesondere wird eine Gewichtsersparnis von 40-50 % im Vergleich zu einem Rohr mit einem separaten Heizgerät erzielt.

Darüber hinaus weist die erfindungsgemäße Luftverteilungseinrichtung eine reduzierte Komplexität des Systems und der Komponenten auf. Beispielsweise entfallen bei dem Luftverteilungsrohr der erfindungsgemäßen Luftverteilungseinrichtung der vorhandene Wärmetauscher, das benötigte Gehäuse und die zusätzlichen Schraub- oder Klemmverbindungen zum Verteilungsrohr.

Insbesondere in den heutigen kommerziellen Flugzeugen erfolgt die Temperaturregelung der vorhandenen Temperaturzonen über die Zumischung von heißer Zapfluft (Trim Air) entnommen aus den Verdichterstufen der Triebwerke. Eine Temperaturzone kann eine Kabine, ein Flugdeck, ein Frachtraum und/oder ein Aufenthaltsraum sein. Bei der Implementierung der erfindungsgemäßen Luftverteilungseinrichtung in ein Luftverteilungssystem kann das Luftverteilungsrohr mit der Heizelement-Schicht die essentielle Funktion der Zonentemperaturregulierung vollständig übernehmen und ersetzen. Somit muss dem Triebwerk keine Zapfluft aus dem internen Verbrennungskreisprozess entzogen werden und die Temperaturzonen im Flugzeug können elektrisch beheizt werden, anstelle von fossiler Verbrennung durch Kerosin. Folglich ist mit dem Luftverteilungsrohr mit der Heizelement-Schicht ein elektrisches Zonen- und Kabinenheizen im Flugzeug möglich, anstelle von genutzter, heißer Zapfluft aus den Triebwerken durch derzeitige, fossile Kerosinverbrennung.

Da die Heizelement-Schicht in dem Luftverteilungsrohr einlaminiert ist, ist die Heizelement-Schicht vor Umwelteinflüssen, wie beispielsweise Feuchtigkeit, Wasser, Staub, Partikeln und/oder im Luftstrom enthaltenen Verunreinigungen, geschützt.

In einer vorteilhaften Ausgestaltung ist die Luftverteilungseinrichtung zwischen einer Luftquelle zum Erzeugen von Zuluft und wenigstens einem Luftauslass zum Zuführen der Zuluft zu einer Temperaturzone angeordnet. Das Luftverteilungsrohr mit der Heizelement-Schicht kann an jeder beliebigen Stelle eines Luftverteilungsnetzes beziehungsweise eines Luftverteilungsrohrnetzes zwischen der Luftquelle, beispielsweise einer Mischeinheit, und den Luftauslässen der Temperaturzonen, wie beispielsweise eine Kabine, ein Flugdeck, ein Frachtraum und/oder ein Aufenthaltsraum, installiert werden. Das bedeutet, dass das Luftverteilungsrohr mit der Heizelement-Schicht in jedem Kabinenversorgungskanal und/oder jedem Raumversorgungskanal und/oder in Steigleitungen eines Flugzeugs installiert werden kann. So kann das Luftverteilungsrohr mit der Heizelement-Schicht direkt in einer Leitung, wie beispielsweise einer Hauptzuleitung für die Temperaturzone, eingebaut werden.

In einer vorteilhaften Ausgestaltung sind mehrere Luftverteilungsrohre mit einer Heizeinrichtung in Reihe geschaltet. Dadurch kann die erforderliche maximale Wärmelast zur Temperaturregelung einer Temperaturzone, wie beispielsweise eine Kabine, ein Flugdeck, ein Frachtraum und/oder ein Aufenthaltsraum, erzeugt werden. Beispielsweise können drei Luftverteilungsrohre in Reihe installiert werden, um den maximalen Wärmelastbedarf für eine komplette, große Temperaturzone zu erfüllen. Die Luftverteilungsrohre können form-, kraft- und/oder stoffschlüssig miteinander verbunden werden. Beispielsweise können die Luftverteilungsrohre durch kraftschlüssiges Verbinden miteinander verbunden sein.

In vorteilhafter Ausgestaltung weist die Heizeinrichtung Kohlenstofffasern auf, die in einer flächigen Matrix angeordnet sind. Diese kann insbesondere aus Papier bestehen. Die Kohlenstoffpartikel fungieren als elektrischer Leiter. Eine derartige elektrische Heizeinrichtung aus Kohlestofffaser-Papier wird insbesondere von der Fa. KOHPA GmbH, Dachau vertrieben. Alternativ kann die Matrix auch aus einem Polymer, beispielweise Polyurethan oder Acrylharz, bestehen, in die Kohlenstoff (Carbon) als Leiter eingebracht ist. Ferner kann die Heizeinrichtung auch eine Heizlack-Schicht aufweisen.

Vorteilhaft weist die Heizeinrichtung eine Dicke von 0,2 bis 10 mm auf. Dadurch weist die Heizeinrichtung einen geringen Außendurchmesser auf. Der Innendurchmesser des Luftverteilungsrohres mit Heizeinrichtung wird vorteilhaft so dimensioniert, dass ein bündiger Übergang zu den sich anschließenden Luftverteilungsrohren ohne Heizeinrichtung vorliegt.

In einer vorteilhaften Ausgestaltung weist die Heizeinrichtung eine von der gewünschten Heizleistung abhängige Länge auf. Das Luftverteilungsrohr kann eine Länge zwischen 0,1 m und 10 m, insbesondere zwischen 0,3 m und 5 m, weiterhin insbesondere zwischen 0,5 m und 1 m, aufweisen.

Die Innenschicht kann eine erste Innenschicht, welche einer Rohrinnenwandung zugewandt ist, und eine zweite Innenschicht, welche der Rohrinnenwandung abgewandt ist, aufweisen, wobei die Heizelement-Schicht zwischen der ersten Innenschicht und der zweiten Innenschicht angeordnet ist. Die Außenschicht kann eine erste Außenschicht, welche der Wärmeisolierungsschicht zugewandt ist, und eine zweite Außenschicht, welche der Wärmeisolierungsschicht abgewandt ist, aufweisen.

In einer vorteilhaften Ausgestaltung ist die Heizeinrichtung, insbesondere die Heizelement-Schicht, auf die erste Innenschicht auflaminiert, und die zweite Innenschicht ist auf die Heizeinrichtung, insbesondere die Heizelement-Schicht, auflaminiert. Da die Heizeinrichtung, insbesondere die Heizelement-Schicht, zwischen den beiden Innenschichten angeordnet ist, ist die Heizeinrichtung, insbesondere die Heizelement-Schicht, vor Umwelteinflüssen geschützt.

Die Wabenstrukturschicht erhöht die Steifigkeit des Luftverteilungsrohres. Zudem verbessert die vakuumierte Wärmeisolierungsschicht die thermische Isolierung und minimiert die Temperaturverluste durch Erwärmung des Luftverteilungsrohres nach außen. Vorteilhaft wird während der Aushärtung der laminierten Schichten des Luftverteilungsrohres im Autoklaven die gesamte Luft in der Wabenstruktur entfernt.

Da die Wabenstrukturschicht aus einem glasfaserverstärkten Kunststoff besteht, weist die Wabenstrukturschicht ein niedriges Gewicht sowie eine ausreichende Steifigkeit auf.

**In** einer vorteilhaften Ausgestaltung ist eine Schutzschicht in die Außenschicht eingebettet.

**In** einer vorteilhaften Ausgestaltung ist die Schutzschicht eine Metallschicht oder ein Metallgewebe. Eine Schutzschicht aus Metall oder Metallgewebe schafft zu Sicherheitszwecken eine Erdungsverbindung.

Da die Innenschicht und die Außenschicht aus einem glasfaserverstärkten Kunststoff sind, weist das Luftverteilungsrohr ein niedriges Gesamtgewicht auf. Das Bauteilgewicht ist ein wesentlicher und bedeutender Parameter im modernen Flugzeugbau. Lediglich das zusätzliche, für die Heizelement-Schicht erforderliche Deltagewicht wird benötigt und auf das Luftverteilungsrohr aus Faserverbundwerkstoff aufgebracht, welches bereits im Systemgewicht berücksichtigt ist. Das Luftverteilungsrohr kann mit Hilfe der Faserverbundtechnologie, insbesondere der Carbonfasertechnologie, individuell und kundenspezifisch gestaltet werden. Die Luftverteilungsrohre können mit unterschiedlichen Durchmessern, Längen und Wärmelasten aufgrund variabel modifizierbarer Faseranteile, insbesondere Carbonfaseranteile, erstellt werden. Vorteilhaft wird ein glasfaserverstärkter Kunststoff gewählt, der hohe Maximaltemperaturen von bis zu 180°C unter Betriebsbedingungen mit einer Nachhärtung im Autoklaven ermöglicht. Dies erlaubt hohe Wärmelasten im Luftverteilungsrohr. Weiterhin vorteilhaft wird als glasfaserverstärkter Kunststoff ein glasfaserverstärktes Prepreg verwendet.

**In** einer vorteilhaften Ausgestaltung weist das Luftverteilungsrohr wenigstens einen Temperatursensor und/oder ein Thermostat auf. **In** einer vorteilhaften Ausgestaltung wird der integrierte Temperatursensor und/oder das integrierte Thermostat von einer Regeleinrichtung überwacht.

Vorteilhaft kann zwischen der Heizeinrichtung und der Außenwand des Luftverteilungsrohres eine innere Wärmeisolierung, insbesondere eine Wabenstrukturschicht, angeordnet sein. Hierdurch werden Wärmeverluste vermieden. Die Heizelement-Schicht wird auf die Innenseite der Wärmeisolationsschicht aufgebracht, beispielsweise durch Verkleben.

Die Heizeinrichtung ist vorteilhaft als elektrische Widerstandsheizung ausgebildet. **In** dieser wird elektrische Energie in thermische Energie das heißt Wärme umgewandelt.

Die flächige Heizeinrichtung kann mit der Innenwand des Luftverteilungsrohres verklebt oder mit diesem laminiert sein. Bei einer einlaminierten Heizeinrichtung wird die Heizelement-Schicht bei der Herstellung des Luftverteilungsrohres zwischen Lagen aus glasfaserverstärktem Kunststoff eingebracht.

Um die Wärmeabstrahlung weiter zu reduzieren, kann auf die Außenseite des Luftverteilungsrohres eine äußere Wärmeisolierung aufgebracht sein.

Der Heizeinrichtung ist vorteilhaft eine Regeleinrichtung zugeordnet, die die Temperatur der Heizeinrichtung regelt. **In** dem Luftverteilungsrohr sind vorteilhaft Temperatursensoren und Thermostate zur Temperaturüberwachung vorgesehen, deren Messsignale der Regeleinrichtung zugeführt werden.

**In** einer vorteilhaften Ausgestaltung ist die Heizeinrichtung mit einer elektrischen Spannungsquelle verbunden. Die Spannungsquelle versorgt die Heizeinrichtung mit Strom. Die Spannungsquelle kann der Energiespeicher eines Bordnetzes eines Flugzeuges sein.

Gemäß einem weiteren Aspekt der Erfindung wird ein Luftverteilungssystem für die Klimatisierung eines Flugzeuges vorgeschlagen. Das Luftverteilungssystem weist eine Luftquelle zum Erzeugen von Zuluft, wenigstens einen Luftauslass zum Zuführen der Zuluft zu einer Temperaturzone und wenigstens eine erfindungsgemäße Luftverteilungseinrichtung auf, wobei die Luftverteilungseinrichtung zwischen der Luftquelle und dem Luftauslass angeordnet ist, um die Zuluft dem Luftauslass zuzuführen.

Da die Luftverteilungseinrichtung zwischen der Luftquelle und dem Luftauslass angeordnet ist, kann das Luftverteilungsrohr mit der Heizelement-Schicht in das aus Rohren gebildete Rohrsystem integriert werden. So kann das Luftverteilungsrohr mit der Heizelement-Schicht direkt in eine Leitung, wie beispielsweise eine Hauptzuleitung und/oder einer Steigleitung, die zu einer temperaturgeregelten Temperaturzone, wie beispielsweise eine Kabine, ein Flugdeck, ein Frachtraum und/oder ein Aufenthaltsraum, führt, integriert werden. Dadurch stehen an dieser möglichen Einbausituation hohe Luftmengen zur Verfügung. Ein typischer Volumenstrom in einer Hauptzuleitung für eine Temperaturzone beträgt ca. 500 l/s. Dieser hohe Luftvolumenstrom ermöglicht eine hohe Heizlastfähigkeit des Luftverteilungsrohres mit der Heizelement-Schicht. Zum Beispiel sind mit dem Luftverteilungsrohr mit der Heizelement-Schicht mit einer Länge von 1 m bei einer hohen Luftstromeinbaulage von 500 l/s mehr als 3000 W Heizleistung möglich.

Das Luftverteilungsrohr mit der Heizelement-Schicht benötigt keine Mischvorrichtung hinter dem Luftverteilungsrohr, um eine gleichmäßige Temperatur im Querschnitt zu erreichen, der in die temperaturgeregelte Temperaturzone einbläst. Durch eine Einbaulage weiter entfernt vom Luftaustrittsbereich der Temperaturzone führen die nachgeschalteten Turbulenzen, die durch die nachfolgenden und vorhandenen Kanalbiegungen, wie beispielsweise 90-Grad-Bögen, verursacht werden, zu einer gemischten und gleichmäßigen Temperaturverteilung des Luftstroms beim Eintritt in die Temperaturzone.

In einer vorteilhaften Ausgestaltung weist das Luftverteilungssystem wenigstens eine aus Rohren beziehungsweise Luftleitungsrohren gebildete Leitung auf, die die Luftquelle mit dem Luftauslass verbindet, wobei die Luftverteilungseinrichtung, insbesondere das wenigstens eine Luftverteilungsrohr mit der Heizelement-Schicht, in der Leitung integriert ist.

Vorteilhaft weist die Luftverteilungseinrichtung mehrere in Reihe geschaltete Luftverteilungsrohre auf, die in einer Leitung zu einer Temperaturzone integriert sein können. Weiterhin vorteilhaft können in jeder Leitung mehrere in Reihe geschaltete Luftverteilungsrohre mit der Heizelement-Schicht vorgesehen sein. Beispielsweise können drei Luftverteilungsrohre in einer Leitung zu einer Temperaturzone integriert sein. Die Leitung kann eine Hauptzuleitung und wenigstens eine Steigleitung aufweisen. Die Hauptleitung leitet die Zuluft von der Luftquelle zu einer oder mehreren Steigleitungen. Die Steigleitung leitet die Zuluft zu einem Luftauslass. Vorteilhaft weisen die Luftverteilungsrohre mit Heizelement-Schicht den selben Innendurchmesser wie die Luftverteilungsrohre ohne Heizelement-Schicht auf.

Das Luftverteilungsrohr aus faserverstärktem Kunststoff mit der Heizelement-Schicht kann zur Temperaturregelung des gesamten Flugzeugrumpfes eingesetzt werden. Weiterhin können die Luftverteilungsrohre mit der Heizelement-Schicht in den Leitungen beziehungsweise Zuleitungen zu den Temperaturzonen, wie beispielsweise einem Flugdeck, einem Galley-Bereich, einer Passagierkabine, einer Kabinentemperaturzonen, Laderäumen und/oder Ruheräumen für die Besatzung, integriert sein.

Vorteilhaft kann die Leitung einen Kanaltemperatursensor (DTS) aufweisen, der eine mittlere Lufttemperatur in der Leitung misst und der von einer Regeleinrichtung überwacht wird. Weiterhin kann in jeder Temperaturzone ein Raumtemperatursensor (CTS) angeordnet sein, der eine Raumtemperatur in der Temperaturzone misst und der von einer Regeleinrichtung überwacht wird. Ein typischer geschlossener Temperaturregelkreis regelt die Zonentemperatur auf den gewünschten Sollwert und reguliert die Heizleistung in dem Luftverteilungsrohr mit der Heizelement-Schicht beziehungsweise den in Reihe geschalteten Luftverteilungsrohren mit der Heizelement-Schicht.

Weiterhin vorteilhaft weist das Luftverteilungssystem eine Regeleinrichtung auf, die mit der Heizeinrichtung eines Luftverteilungsrohres verbunden ist und die die Temperatur der Heizeinrichtung regelt. Weiterhin vorteilhaft kann das Luftverteilungsrohr einen Temperatursensor aufweisen, der mit der Regeleinrichtung verbunden. Vorteilhaft ist der Temperatursensor über ein Datenkabel mit der Regeleinrichtung verbunden. Über das Datenkabel werden die Temperaturdaten des Temperatursensors an die Regeleinrichtung übertragen und ausgewertet. Die Regeleinrichtung regelt auf Basis der übertragenen Temperaturdaten des Temperatursensors die Temperatur in dem Luftverteilungsrohr, insbesondere der Heizeinrichtung, indem die Regeleinrichtung die **EIN** / AUS (ON / OFF) Schaltintervalle (Duty Cycles) der Heizeinrichtung regelt. Die eingebrachte Wärme richtet sich somit nach dem Zeitintervall, indem die Heizeinrichtung angeschaltet wird.

In einer vorteilhaften Ausgestaltung weist das Luftverteilungsrohr ein Thermostat auf, das mit der Regeleinrichtung verbunden ist. Das Thermostat kann ein thermischer Schalter sein, der bei Überschreiten eines definierten Öffnungsschaltpunkts den Schalter entsprechend öffnet. Das Öffnen des Schalters wird von der Regeleinrichtung entsprechend erkannt und die Heizeinrichtung wird abgeschaltet. Das Thermostat ist somit eine Sicherheitsbackup Funktion für den Fall, dass die Temperaturregelung über den Temperatursensor und die Regeleinrichtung nicht funktioniert. Der Set-Point des Thermostats liegt folglich höher als die maximal geregelte Temperatur über den Temperatursensor.

In einer vorteilhaften Ausgestaltung weist das Luftverteilungssystem eine Spannungsquelle auf, die mit der Heizeinrichtung eines Luftverteilungsrohres verbunden ist. Die Spannungsquelle versorgt die Heizeinrichtung mit Spannung. Die Spannungsquelle kann der Energiespeicher eines Bordnetzes eines Flugzeuges sein.

Vorteilhaft weist die erfindungsgemäße Luftverteilungseinrichtung Überhitzungsschutzvorrichtungen, beispielsweise durch das Einlaminieren eines Temperaturfühlers und/oder eines Thermostats in das Luftverteilungsrohr, auf, um die maximale Materialinnentemperatur zu kontrollieren und Überhitzungsbedingungen zu vermeiden.

Gemäß einem weiteren Aspekt der Erfindung wird ein Verfahren zur Herstellung eines Luftverteilungsrohres einer erfindungsgemäßen Luftverteilungseinrichtung vorgeschlagen. Bei dem Verfahren wird zunächst ein laminiertes Luftverteilungsrohr mit freiem Strömungsquerschnitt, das eine Innenschicht aus einem vorimprägnierten, glasfaserverstärkten Halbzeug, eine elektrische Heizelement-Schicht, eine Wärmeisolierungsschicht aus einer Wabenstrukturschicht und eine Außenschicht aus einem vorimprägnierten, glasfaserverstärkten Halbzeug aufweist, erzeugt. Anschließend wird das erzeugte Luftverteilungsrohr in einem Autoklaven ausgehärtet, und gleichzeitig wird die Wabenstrukturschicht in dem Autoklaven vakuumiert.

Weitere Merkmale und Vorteile der Erfindung ergeben sich aus der nachfolgenden Beschreibung von Ausführungsbeispielen, die in der Zeichnung schematisch dargestellt ist. Hierin zeigen:
- Fig. 1: eine schematische Ansicht einer erfindungsgemäßen Luftverteilungseinrichtung gemäß einer ersten Ausführungsform;
- Fig. 2: das Luftverteilungsrohr gemäß einer ersten Ausführungsform mit integrierter Heizeinrichtung der Luftverteilungseinrichtung gemäß Fig. 1;
- Fig. 3: eine vergrößerte Darstellung einer zweiten Ausführungsform eines Luftverteilungsrohres mit innerer und äußerer Wärmeisolierung;
- Fig. 4: eine schematische Ansicht eines Luftverteilungssystems mit einer erfindungsgemäßen Luftverteilungseinrichtung;
- Fig. 5: einen vergrößerten Querschnitt durch ein Luftverteilungsrohr gemäß einer dritten Ausführungsform; und
- Fig. 6: einen vergrößerten Querschnitt durch ein Luftverteilungsrohr gemäß einer vierten Ausführungsform.

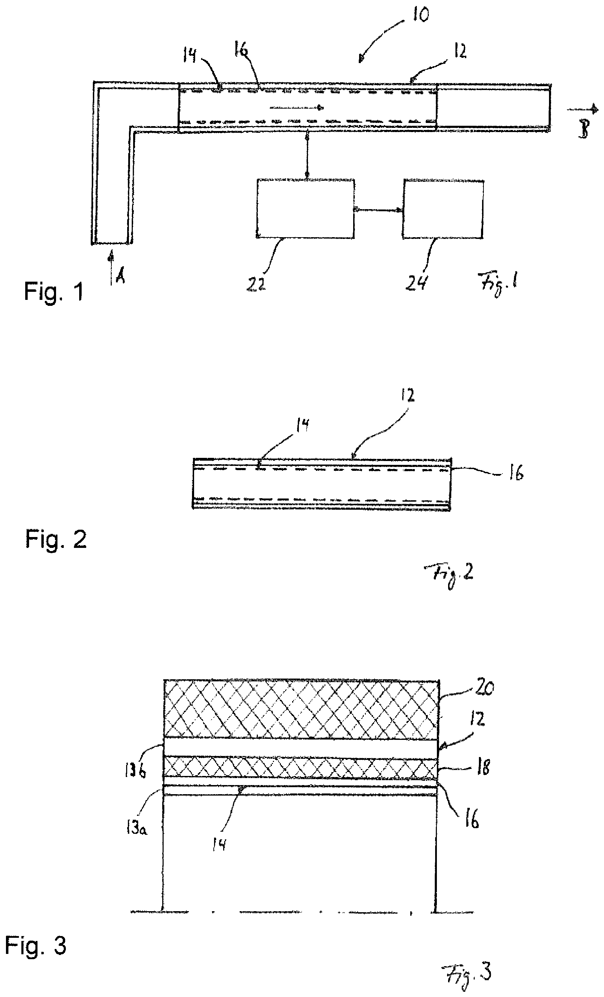

Fig. 1 zeigt eine Luftverteilungseinrichtung 10, die in einer Klimaanlage (HVAC System) eines Flugzeuges Verwendung findet. Die Luftverteilungseinrichtung 10 besteht aus einem die Luft führenden Rohrsystem, das aus mehreren Luftverteilungsrohren 12 gebildet ist. Die Luft, die von einem nicht dargestellten Gebläse gefördert wird, strömt in Richtung des Pfeiles A in die Luftverteilungseinrichtung 12 ein und in Richtung des Pfeiles B aus dieser aus.

Eines der Luftverteilungsrohre 12 weist eine elektrische Heizeinrichtung 14 auf, die mit mindestens einer Heizelement-Schicht 16 ausgebildet ist. Es können aber auch mehrere mit jeweils einer Heizeinrichtung 14 versehene Luftverteilungsrohre 12 vorgesehen sein, um die erforderliche Heizleistung zu erbringen.

Wie aus Fig.2 hervorgeht, ist die elektrische Heizeinrichtung 14 an der Innenwand des Luftverteilungsrohres 12 angeordnet.

Mit der Heizeinrichtung 14 kann die durch die Luftverteilungseinrichtung 10 strömende Luft erwärmt werden. Die Heizeinrichtung 14 ist mit einer Regeleinrichtung 22 verbunden, über die die Leistung der Heizeinrichtung 14 regelbar ist. Die Reglung der Heizeinrichtung 14 erfolgt über nicht dargestellte Temperatursensoren, die in der Luftverteilungseinrichtung 10 angeordnet sind. Die Regeleinrichtung 22 ist mit dem Flugzeugnetzwerk verbunden. Die Heizelement-Schicht 16 besteht beispielsweise aus einem Kohlenstofffaser-Papier, wie es von der Fa. KOHPA GmbH, Dachau vertrieben wird. Hierbei sind Kohlestoffpartikel oder Kohlestofffasern in eine Papier-Matrix eingebracht. Alternativ kann aber die Matrix auch aus einem Polymer, beispielsweise Polyurethan oder Acrylharz, bestehen.

Die Heizeinrichtung 14 liegt somit als flächige elektrische Widerstandheizung vor. Die in die Matrix der Heizelement-Schicht 16 eingebrachten Kohlenstofffasern dienen als elektrischer Leiter. Der durch die Heizelement-Schicht 16 fließende Strom erwärmt die Heizelement-Schicht 16. Die entstehende Strahlungswärme erhitzt die durch das Luftverteilungsrohr 12 durchströmende Luft.

Das Luftverteilungsrohr besteht aus glasfaserverstärktem Kunststoff (GFK). Die Heizelement-Schicht 16 der Heizeinrichtung 14 weist eine Dicke von 0,2 bis 10 mm auf und ist auf die Innenwand des Luftverteilungsrohres 12 aufgeklebt oder mit diesem laminiert.

Fig. 3 zeigt eine zweite Ausführungsform eines Luftverteilungsrohres 12, zu dessen Beschreibung die bereits eingeführten Bezugszeichen für gleiche oder funktionsgleiche Teile verwendet werden.

Das Luftverteilungsrohr 12 wird aus glasfaserverstärktem Kunststoff hergestellt. Das Luftverteilungsrohr 12 weist eine innere Schicht 13a auf, auf die eine Heizelement- Schicht 16 der Heizeinrichtung 14 durch Laminieren aufgebracht ist. Die Heizelement-Schicht 16 wird von einer inneren Wärmeisolierung 18 umgeben, die auf die Heizelement-Schicht 16 aufgebracht ist. Die innere Wärmeisolierung 18 ist als Wabenstrukturschicht ausgebildet. Auf die innere Wärmeisolierung 18 ist eine äußere Schicht 13b des Luftverteilungsrohres 12 aufgebracht.

Weiterhin ist an der Außenseite des Luftverteilungsrohres 12 eine äußere Wärmeisolierung 20 angeordnet, die auf die äußere Schicht 13b aufgebracht ist.

Die beiden Wärmeisolierungen 18, 20 verhindern Wärmeverluste nach außen. Durch die Anordnung der Heizeinrichtung im Innern des Luftverteilungsrohres 12 ist die Heizeinrichtung 14 geschützt. Weiterhin tritt kein Druckverlust durch die Heizeinrichtung 14 auf.

Nachfolgend wird ein Luftverteilungssystem 100 mit Luftverteilungsrohren 12 beschrieben, wobei für gleiche oder funktionsgleiche Teile dieselben Bezugszeichen verwendet werden.

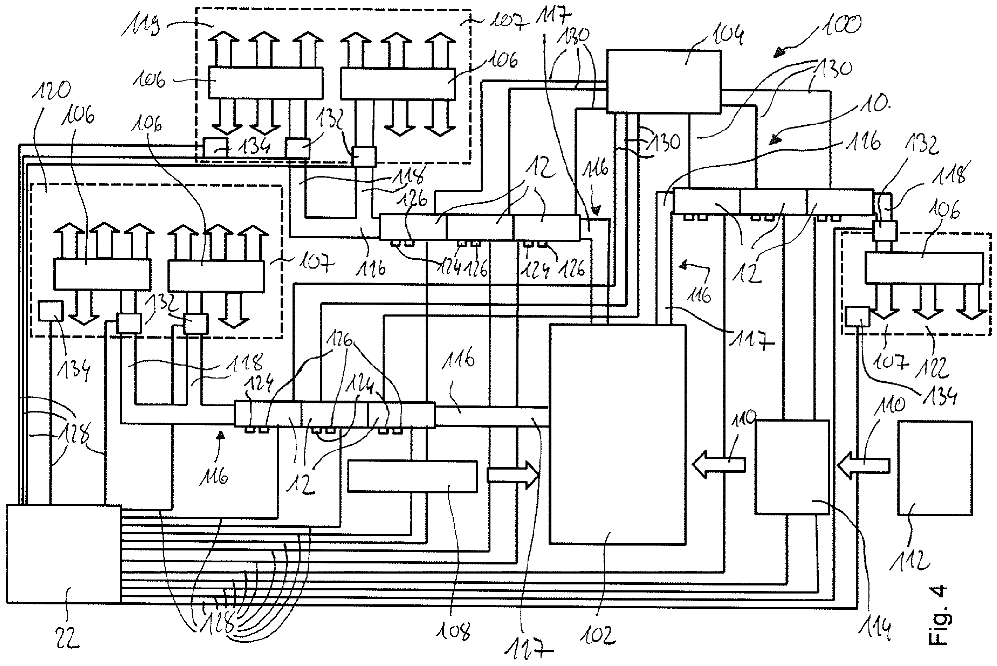

Gemäß Figur 4 weist das Luftverteilungssystem 100 eine Luftquelle 102 zum Erzeugen von Zuluft, die Luftverteilungseinrichtung 10 mit mehreren Luftverteilungsrohren 12 mit Heizeinrichtung (14), die Regeleinrichtung 22 zum Regeln der Temperatur der Heizeinrichtungen 14 der Luftverteilungsrohre 12, eine Spannungsquelle 104 zum Versorgen der Heizeinrichtungen 14 mit Spannung und mehrere Luftauslässe 106 zum Zuführen der Zuluft zu unterschiedlichen Temperaturzonen 107 auf.

In der Luftquelle 102 wird Frischluft 108 mit rezirkulierter Luft 110 gemischt und in die Luftverteilungseinrichtung 10 eingespeist, um die Temperaturzonen 107 mit Zuluft zu versorgen. Die rezirkulierte Luft 110 stammt aus einer oder mehreren Temperaturzonen 107, wie beispielsweise aus einer Kabine.

Die rezirkulierte Luft 110 wird zunächst in einem Filter 112 gefiltert und anschließend über ein Gebläse 114 in die Luftquelle 102 eingespeist, in welcher die gefilterte rezirkulierte Luft 110 mit der Frischluft 108 gemischt wird.

Die Luftverteilungseinrichtung 10 besteht aus einem die Luft führenden Rohrsystem, das aus mehreren Luftverteilungsrohren 12 gebildet ist. Die Luftverteilungsrohre 12 bilden Leitungen 116, die die einzelnen Temperaturzonen 107 mit Zuluft versorgen. Die Leitungen 116 weisen Hauptleitungen 117 und Steigleitungen 118 auf. Die Hauptleitungen 117 leiten die Zuluft von der Luftquelle 102 zu den Steigleitungen 118 und die Steigleitungen 118 leiten die Zuluft zu den Luftauslässen 106.

Die verschiedenen Temperaturzonen 107 sind vorliegend eine Kabine 119, ein Flugdeck 120 und ein Frachtdeck 122, die in Fig. 4 als strichlinierte Rechtecke dargestellt sind.

Um die Zuluft zu den einzelnen Temperaturzonen 107 zu erwärmen, sind vorliegend in jeder Hauptleitung 118 drei Luftverteilungsrohre 12 mit einer Heizeinrichtung 14 angeordnet. Alternativ oder zusätzlich kann ein Luftverteilungsrohr 12 mit einer Heizeinrichtung 14 oder können mehrere Luftverteilungsrohre 12 mit einer Heizeinrichtung 14 in den Steigleitungen 118 angeordnet sein. Die anderen Luftverteilungsrohre 12 weisen keine Heizeinrichtung 14 auf.

Wie in Fig. 4 ersichtlich ist, weist jedes Luftverteilungsrohr 12 mit einer Heizeinrichtung 14, einen Temperatursensor 124 und ein Thermostat 126 auf, die über ein Datenkabel 128 mit der Regeleinrichtung 22 verbunden sind. Ferner ist jedes Luftverteilungsrohr 12 mit der Spannungsquelle 104 über ein Stromkabel 130 verbunden.

Über das Datenkabel 128 werden die Temperaturdaten des Temperatursensors 128 an die Regeleinrichtung 22 übertragen und ausgewertet. Die Regeleinrichtung 22 regelt auf Basis der übertragenen Temperaturdaten des Temperatursensors 128 die Temperatur in dem Luftverteilungsrohr 12, insbesondere der Heizeinrichtung 14. Hierzu regelt die Regeleinrichtung 22 die EIN / AUS (ON / OFF) Schaltintervalle (Duty Cycles) der Heizeinrichtung 14. Die eingebrachte Wärme richtet sich somit nach dem Zeitintervall, indem die Heizeinrichtung 14 angeschaltet wird.

Die Regeleinrichtung 22 überwacht über das Datenkabel 128 den Zustand des Thermostats 126. Das Thermostat 126 ist ein thermischer Schalter, der bei Überschreiten eines definierten Öffnungsschaltpunkts den Schalter entsprechend öffnet. Das Öffnen des Schalters wird von der Regeleinrichtung 22 entsprechend erkannt und die Heizeinrichtung 14 wird abgeschaltet. Das Thermostat 126 ist somit eine Sicherheitsbackup Funktion für den Fall, dass die Temperaturregelung über den Temperatursensor 128 und die Regeleinrichtung 22 nicht funktioniert. Der Set-Point des Thermostats 126 liegt somit auch höher als die maximal geregelte Temperatur über den Temperatursensor 124.

Wie zudem in Fig. 4 ersichtlich ist, ist in jeder Leitung 116 ein Kanaltemperatursensor 132 zum Messen der Temperatur in der Leitung 116 integriert, und in jeder Temperaturzone 107 ist ein Zonentemperatursensor 134 zum Messen der Temperatur in der Temperaturzone 107 angeordnet. Die Kanaltemperatursensoren 132 und die Zonentemperatursensoren 134 sind ebenfalls über Datenkabel 128 mit der Regeleinrichtung 22 verbunden.

Da die Temperatursensoren 124, die Thermostate 126, die Kanaltemperatursensoren 132 und die Zonentemperatursensoren 134 mit der Regeleinrichtung 22 verbunden ist, wird ein geschlossener Temperaturregelkreis geschaffen. Indem die Heizleistung der Heizeinrichtungen 14 der Luftverteilungsrohre 12 reguliert wird, kann die Temperatur einer Temperaturzone 107 auf den gewünschten Sollwert geregelt werden.

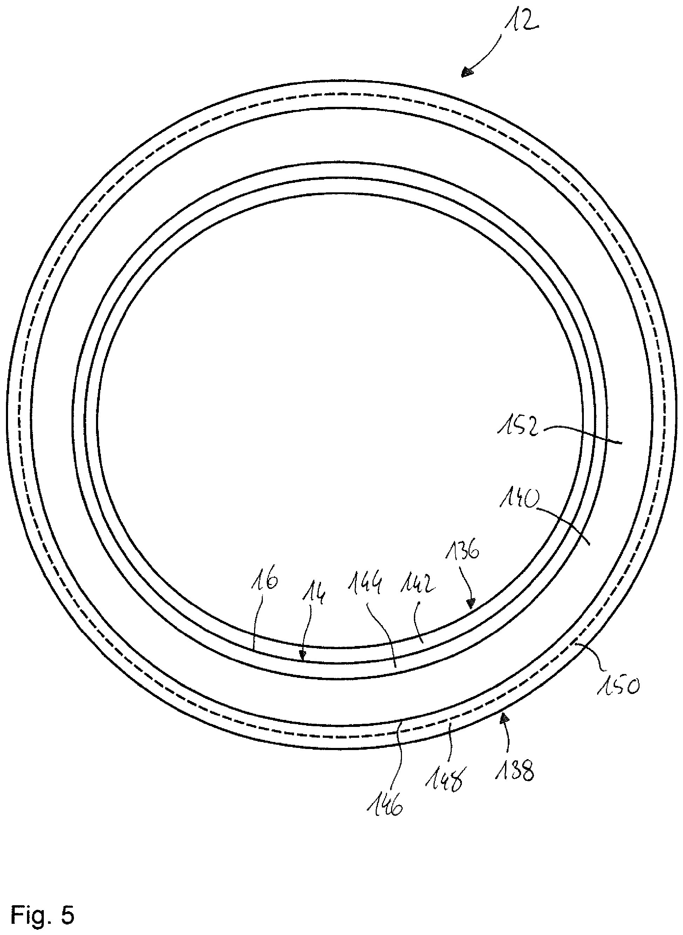

In Fig. 5 ist ein Querschnitt durch das Luftverteilungsrohr 12 gemäß einer dritten Ausführungsform dargestellt. Das Luftverteilungsrohr 12 weist eine Innenschicht 136, eine Außenschicht 138 und eine zwischen der Innenschicht 136 und der Außenschicht 138 angeordnete Wärmeisolierungsschicht 140 auf.

Wie in Fig. 5 ersichtlich ist, weist die Innenschicht 136 eine dem Rohrinneren zugewandte erste Innenschicht 142 und eine dem Rohrinneren abgewandte zweite Innenschicht 144 auf, wobei zwischen der ersten Innenschicht 142 und der zweiten Innenschicht 144 die Heizelement-Schicht 16 angeordnet ist.

Die Außenschicht 138 weist eine der Wärmeisolierungsschicht 140 zugewandten erste Außenschicht 146 und eine der Wärmeisolierungsschicht 140 abgewandte zweite Außenschicht 148 auf, wobei zwischen den beiden Außenschichten 146, 148 eine Schutzschicht 150 angeordnet ist.

Die Innenschichten 142, 144 und die Außenschichten 146, 148 sind aus einem glasfaserverstärkten Kunststoff, der Temperaturen von bis zu 180°C Stand hält.

Die Schutzschicht 150 ist ein Metallgewebe, das im Luftverteilungsrohr 12 als Erdung dient.

Die Wärmeisolierungsschicht 140 ist eine vakuumierte Wabenstrukturschicht 152, die dem Luftverteilungsrohr 12 Stabilität verleiht und zudem zur thermischen Isolierung des Luftverteilungsrohres 12 nach außen dient.

Im Folgenden wird ein mögliches Verfahren zur Herstellung des in Fig. 5 dargestellten Luftverteilungsrohres 12 erläutert.

Zunächst wird in eine Form ein erstes vorimprägniertes, glasfaserverstärktes Halbzeug beziehungsweise Prepreg, das die erste Innenschicht 142 bildet, eingelegt. Auf das erste Halbzeug wird die Heizelement-Schicht 16 aufgelegt. Auf die Heizelement-Schicht 16 wird ein zweites vorimprägniertes, glasfaserverstärktes Halbzeug beziehungsweise Prepreg, das die zweite Innenschicht 144 bildet, aufgelegt. Anschließend wird die Wabenstrukturschicht 152 auf das zweite Halbzeug aufgelegt und auf die Wabenstrukturschicht 152 wird ein drittes vorimprägniertes, glasfaserverstärktes Halbzeug beziehungsweise Prepreg, das die erste Außenschicht 146 bildet, aufgelegt. Auf das dritte Halbzeug wird dann die Schutzschicht 150 aufgelegt und schließlich wird ein viertes vorimprägniertes, glasfaserverstärktes Halbzeug beziehungsweise Prepreg, das die zweite Außenschicht 148 bildet, aufgelegt. Nachdem alle Schichten übereinander gelegt sind, werden diese zu dem Luftverteilungsrohr 12 geformt. Das Luftverteilungsrohr 12 wird in einen nicht dargestellten Autoklaven eingebracht und dort ausgehärtet, wobei gleichzeitig die Wabenstrukturschicht 152 vakuumiert wird. Nach dem Aushärten und Vakuumieren des Luftverteilungsrohres 12 wird dieses aus dem Autoklaven entnommen.

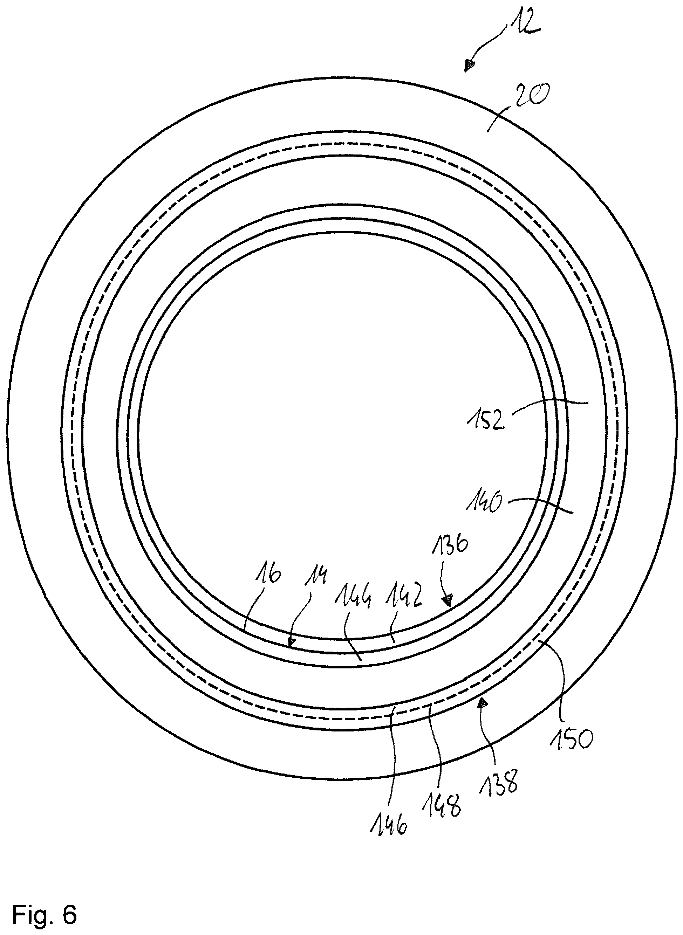

**In** Fig. 6 ist ein ist ein Querschnitt durch ein Luftverteilungsrohr 12 gemäß einer vierten Ausführungsform gezeigt, dass sich von dem Luftverteilungsrohr gemäß der dritten Ausführungsform dadurch unterscheidet, dass auf die Außenseite des Luftverteilungsrohres 12 eine äußere Wärmeisolierung 20 aufgebracht ist.

Die Wärmeisolierung 20 besteht aus offenen, zellenförmigen und flexiblen Polyimide (PI) (Schaumstoff), und wird nach der Entnahme des Luftverteilungsrohres 12 aus dem Autoklaven auf die Außenseite des Luftverteilungsrohres 12 aufgebracht, beispielsweise wird die Wärmeisolierung 20 mit der Außenseite des Luftverteilungsrohres verklebt.

Mit der zuvor beschriebenen Luftverteilungseinrichtung 10, die eine elektrische Heizeinrichtung 14 aufweist, kann die durch die Luftverteilungseinrichtung 10 geförderte Luft erwärmt werden. Hierdurch kann die Leistung des Ventilators zur Förderung der Luft gegenüber im Querschnitt angeordneten Heizeinrichtungen geringer sein.

Weiterhin zeichnet sich die elektrische Heizeinrichtung 14 durch ein geringes Gewicht aus.

Mit der erfindungsgemäßen Luftverteilungseinrichtung 10 wird ein elektrisches Zonen-und Kabinenheizen im Flugzeug möglich.

Da sich die Luftverteilungsrohre 12 unmittelbar in einer Leitung 116 einer Temperaturzone befinden, durch welche ein hoher Luftstrom von ca. 500 l/s und mehr strömt, wird ein hoher, leistungsfähiger Wärmeeintrag in die gesamte Zone, beispielsweise über 3200 W auf 500 l/s, ermöglicht. Dadurch ist die Anzahl der notwendigen Luftverteilungsrohre 12, um eine gesamte Temperaturzone 107 elektrisch zu beheizen, reduziert.

### Bezugszeichenliste

- 10: Luftverteilungseinrichtung
- 12: Luftverteilungsrohr
- 13a,b: Schicht
- 14: Heizeinrichtung
- 16: Heizelement-Schicht
- 18: Innere Wärmeisolierung
- 20: Äußere Wärmeisolierung
- 22: Regeleinrichtung
- 24: Flugzeugnetzwerk
- A: Einströmluft
- B: Ausströmluft

- 100: Luftverteilungssystem
- 102: Luftquelle
- 104: Spannungsquelle
- 106: Luftauslass
- 107: Temperaturzone
- 108: Frischluft
- 110: rezirkulierte Luft
- 112: Filter
- 114: Gebläse
- 116: Leitung
- 117: Hauptleitung
- 118: Steigleitung
- 119: Kabine
- 120: Flugdeck
- 122: Frachtraum
- 124: Temperatursensor
- 126: Thermostat
- 128: Datenkabel
- 130: Stromkabel
- 132: Kanaltemperatursensor
- 134: Zonentemperatursensor
- 136: Innenschicht
- 138: Außenschicht
- 140: Wärmeisolierungsschicht
- 142: erste Innenschicht
- 144: zweite Innenschicht
- 146: erste Außenschicht
- 148: zweite Außenschicht
- 150: Schutzschicht
- 152: Wabenstrukturschicht

## Patentansprüche

1. Luftverteilungseinrichtung (10), insbesondere für die Klimatisierung eines Flugzeuges, wobei die Luftverteilungseinrichtung (10) mindestens ein Luftverteilungsrohr (12) und eine elektrische Heizeinrichtung (14), die in dem Luftverteilungsrohr (12) zur Erwärmung der durch das Luftverteilungsrohr (12) strömenden Luft aufgenommen ist, aufweist, wobei das Luftverteilungsrohr (12) einen freien Strömungsquerschnitt aufweist, **dadurch gekennzeichnet, dass** das Luftverteilungsrohr (12) aus einem glasfaserverstärkten Kunststoff besteht und eine Innenschicht (136), eine Außenschicht (138) und eine zwischen der Innenschicht (136) und der Außenschicht (138) angeordnete Wärmeisolierungsschicht (140) aufweist, dass die Heizeinrichtung (14) in die Innenschicht (136) eingebettet ist, dass die Heizeinrichtung (14) als Heizelement-Schicht (16) ausgebildet ist, die in dem Luftverteilungsrohr (12) einlaminiert ist, und dass die Wärmeisolierungsschicht (140) als vakuumierte Wabenstrukturschicht ausgebildet ist.

2. Luftverteilungseinrichtung (10) nach Anspruch 1, **dadurch gekennzeichnet, dass** diese zwischen einer Luftquelle (102) zum Erzeugen von Zuluft und wenigstens einem Luftauslass (106) zum Zuführen der Zuluft zu einer Temperaturzone (107) angeordnet ist.

3. Luftverteilungseinrichtung (10) nach Anspruch 1 oder 2, **dadurch gekennzeichnet, dass** mehrere Luftverteilungsrohre (12) mit einer Heizeinrichtung (14) in Reihe geschaltet sind.

4. Luftverteilungseinrichtung (10) nach einem der vorhergehenden Ansprüche, **dadurch gekennzeichnet, dass** die Heizeinrichtung (14) Kohlenstoffpartikel aufweist, die in einer flächigen Matrix, insbesondere aus Papier oder einem Polymer, aufgenommen sind, oder dass die Heizeinrichtung (14) eine Heizlack-Schicht aufweist.

5. Luftverteilungseinrichtung (10) nach einem der vorhergehenden Ansprüche, **dadurch gekennzeichnet, dass** die Heizeinrichtung (14) eine Dicke von 0,2 bis 10 mm aufweist.

6. Luftverteilungseinrichtung (10) nach einem der vorhergehenden Ansprüche, **dadurch gekennzeichnet, dass** die Heizeinrichtung (14) eine von der gewünschten Heizleistung abhängige Länge aufweist.

7. Luftverteilungseinrichtung (10) nach einem der vorhergehenden Ansprüche, **dadurch gekennzeichnet, dass** eine Schutzschicht (150) in die Außenschicht (138) eingebettet ist, wobei vorzugsweise die Schutzschicht (150) aus Metall oder Metallgewebe besteht

8. Luftverteilungseinrichtung (10) nach einem der vorhergehenden Ansprüche, **dadurch gekennzeichnet, dass** das Luftverteilungsrohr (12) wenigstens einen Temperatursensor (124) und/oder ein Thermostat (126) aufweist.

9. Luftverteilungseinrichtung (10) nach einem der vorhergehenden Ansprüche, **dadurch gekennzeichnet, dass** die Heizeinrichtung (14) als elektrische Widerstandsheizung ausgebildet ist.

10. Luftverteilungseinrichtung (10) nach einem der vorhergehenden Ansprüche, **dadurch gekennzeichnet, dass** die Heizeinrichtung (14) mit der Innenwand des Luftverteilungsrohres (12) verklebt ist.

11. Luftverteilungseinrichtung (10) nach einem der vorhergehenden Ansprüche, **dadurch gekennzeichnet, dass** auf die Außenseite des Luftverteilungsrohres (12) eine äußere Wärmeisolierung (20) aufgebracht ist.

12. Luftverteilungseinrichtung (10) nach einem der vorhergehenden Ansprüche, **dadurch gekennzeichnet, dass** der Heizeinrichtung (14) eine Regeleinrichtung (22) zugeordnet ist, die die Temperatur der Heizeinrichtung (14) regelt und/oder dass die Heizeinrichtung (14) mit einer Spannungsquelle (104) verbunden ist.

13. Luftverteilungssystem (100) für die Klimatisierung eines Flugzeuges, mit einer Luftquelle (102) zum Erzeugen von Zuluft, wenigstens einem Luftauslass (106) zum Zuführen der Zuluft zu einer Temperaturzone (107) und wenigstens einer Luftverteilungseinrichtung (10) nach einem der Ansprüche 1 bis 12, wobei die Luftverteilungseinrichtung (10) zwischen der Luftquelle (102) und dem Luftauslass (106) angeordnet ist, um die Zuluft dem Luftauslass (106) zuzuführen.

14. Luftverteilungssystem (100) nach Anspruch 13, **dadurch gekennzeichnet, dass** eine Vielzahl von Luftverteilungsrohren (12) mit und ohne Heizeinrichtung (14) in Reihe geschaltet und miteinander verbunden sind.

15. Verfahren zur Herstellung eines Luftverteilungsrohres (12) einer Luftverteilungseinrichtung (10) nach einem der Ansprüche 1 bis 12, das folgende Schritte aufweist:
a) Erzeugen eines laminierten Luftverteilungsrohres (12) mit freiem Strömungsquerschnitt, das eine Innenschicht (136) aus einem vorimprägnierten, glasfaserverstärkten Halbzeug, eine elektrische Heizelement-Schicht (16), eine Wärmeisolierungsschicht (140) aus einer Wabenstrukturschicht und eine Außenschicht (138) aus einem vorimprägnierten, glasfaserverstärkten Halbzeug aufweist, und
b) Aushärten des gemäß Schritt a) erzeugten Luftverteilungsrohres (12) und gleichzeitiges Vakuumieren der Wabenstrukturschicht (152) in einem Autoklaven.

## Claims

1. An air distribution device (10), in particular for the air conditioning of an aircraft, the air distribution device (10) comprising at least one air distribution pipe (12) and an electrical heating device (14) which is accommodated in the air distribution pipe (12) for heating the air flowing through the air distribution pipe (12), the air distribution pipe (12) having a free flow cross-section, **characterized in that** the air distribution pipe (12) is made of a glass-fiber-reinforced plastic and includes an inner layer (136), an outer layer (138), and a heat insulation layer (140) arranged between the inner layer (136) and the outer layer (138), **in that** the heating device (14) is embedded in the inner layer (136), **in that** the heating device (14) is formed as a heating element layer (16) which is laminated into the air distribution pipe (12), and **in that** the thermal insulation layer (140) is formed as a vacuumed honeycomb structure layer.

2. The air distribution device (10) according to claim 1, **characterized in that** it is arranged between an air source (102) for generating supply air and at least one air outlet (106) for supplying the supply air to a temperature zone (107).

3. The air distribution device (10) according to claim 1 or 2, **characterized in that** several air distribution pipes (12) are connected in series with a heating device (14).

4. The air distribution device (10) according to one of the preceding claims, **characterized in that** the heating device (14) has carbon particles which are accommodated in a planar matrix, in particular of paper or a polymer, or **in that** the heating device (14) has a heating lacquer layer.

5. The air distribution device (10) according to one of the preceding claims, **characterized in that** the heating device (14) has a thickness of 0.2 to 10 mm.

6. The air distribution device (10) according to one of the preceding claims, **characterized in that** the heating device (14) has a length dependent on the desired heating power.

7. The air distribution device (10) according to one of the preceding claims, **characterized in that** a protective layer (150) is embedded in the outer layer (138), preferably the protective layer (150) being made of metal or metal mesh.

8. The air distribution device (10) according to one of the preceding claims, **characterized in that** the air distribution pipe (12) comprises at least one temperature sensor (124) and/or a thermostat (126).

9. The air distribution device (10) according to one of the preceding claims, **characterized in that** the heating device (14) is formed as an electrical resistance heater.

10. The air distribution device (10) according to one of the preceding claims, **characterized in that** the heating device (14) is bonded to the inner wall of the air distribution pipe (12).

11. The air distribution device (10) according to one of the preceding claims, **characterized in that** an outer thermal insulation (20) is applied to the outer side of the air distribution pipe (12).

12. The air distribution device (10) according to one of the preceding claims, **characterized in that** the heating device (14) is assigned a regulating device (22) which regulates the temperature of the heating device (14) and/or **in that** the heating device (14) is connected to a voltage source (104).

13. An air distribution system (100) for air conditioning of an aircraft, comprising an air source (102) for generating supply air, at least one air outlet (106) for supplying the supply air to a temperature zone (107), and at least one air distribution device (10) according to any one of claims 1 to 12, wherein the air distribution device (10) is arranged between the air source (102) and the air outlet (106) to supply the supply air to the air outlet (106).

14. The air distribution system (100) according to claim 13, **characterized in that** a plurality of air distribution pipes (12) with and without heating devices (14) are connected in series and interconnected.

15. A method of manufacturing an air distribution pipe (12) of an air distribution device (10) according to any one of claims 1 to 12, comprising the following steps:
a) creating a laminated air distribution pipe (12) having a free flow cross-section and having an inner layer (136) made of a pre-impregnated, glass-fiber-reinforced semi-finished product, an electrical heating element layer (16), a thermal insulation layer (140) made of a honeycomb structure layer and an outer layer (138) made of a pre-impregnated, glass-fiber-reinforced semi-finished product; and
b) curing the air distribution pipe (12) created according to step a) and simultaneously vacuuming the honeycomb structure layer (152) in an autoclave.

## Revendications

1. Dispositif de distribution d'air (10), en particulier pour la climatisation d'un avion, le dispositif de distribution d'air (10) comprenant au moins un tube de distribution d'air (12) et un dispositif de chauffage électrique (14) qui est logé dans le tube de distribution d'air (12) pour chauffer l'air s'écoulant à travers le tube de distribution d'air (12), le tube de distribution d'air (12) présentant une section transversale d'écoulement libre, **caractérisé en ce que** le tube de distribution d'air (12) est constitué d'une matière plastique renforcée par des fibres de verre et présente une couche intérieure (136), une couche extérieure (138) et une couche d'isolation thermique (140) disposée entre la couche intérieure (136) et la couche extérieure (138), **en ce que** le dispositif de chauffage (14) est incorporé dans la couche intérieure (136), **en ce que** le dispositif de chauffage (14) est réalisé sous la forme d'une couche d'élément chauffant (16) qui est stratifiée dans le tube de distribution d'air (12), et **en ce que** la couche d'isolation thermique (140) est réalisée sous la forme d'une couche de structure en nid d'abeilles mise sous vide.

2. Dispositif de distribution d'air (10) selon la revendication 1, **caractérisé en ce qu'**il est disposé entre une source d'air (102) conçue pour assurer de l'air d'alimentation et au moins une sortie d'air (106) conçue pour fournir l'air d'alimentation à une zone de température (107).

3. Dispositif de distribution d'air (10) selon la revendication 1 ou 2, **caractérisé en ce que** plusieurs tubes de distribution d'air (12) sont connectés en série avec un dispositif de chauffage (14).

4. Dispositif de distribution d'air (10) selon l'une des revendications précédentes, **caractérisé en ce que** le dispositif de chauffage (14) comprend des particules de carbone qui sont logées dans une matrice plate, en particulier en papier ou en un polymère, ou **en ce que** le dispositif de chauffage (14) présente une couche de vernis chauffant.

5. Dispositif de distribution d'air (10) selon l'une des revendications précédentes, **caractérisé en ce que** le dispositif de chauffage (14) présente une épaisseur de 0,2 à 10 mm.

6. Dispositif de distribution d'air (10) selon l'une des revendications précédentes, **caractérisé en ce que** le dispositif de chauffage (14) présente une longueur qui dépend de la puissance de chauffage souhaitée.

7. Dispositif de distribution d'air (10) selon l'une des revendications précédentes, **caractérisé en ce qu'**une couche de protection (150) est incorporée dans la couche extérieure (138), la couche de protection (150) étant de préférence constituée de métal ou de tissu métallique.

8. Dispositif de distribution d'air (10) selon l'une des revendications précédentes, **caractérisé en ce que** le tube de distribution d'air (12) comporte au moins un capteur de température (124) et/ou un thermostat (126).

9. Dispositif de distribution d'air (10) selon l'une des revendications précédentes, **caractérisé en ce que** le dispositif de chauffage (14) est réalisé sous la forme d'un chauffage électrique par résistance.

10. Dispositif de distribution d'air (10) selon l'une des revendications précédentes, **caractérisé en ce que** le dispositif de chauffage (14) est collé à la paroi intérieure du tube de distribution d'air (12).

11. Dispositif de distribution d'air (10) selon l'une des revendications précédentes, **caractérisé en ce qu'**une isolation thermique extérieure (20) est appliquée sur la face extérieure du tube de distribution d'air (12).

12. Dispositif de distribution d'air (10) selon l'une des revendications précédentes, **caractérisé en ce que** le dispositif de chauffage (14) est associé à un dispositif de régulation (22) qui régule la température du dispositif de chauffage (14), et/ou **en ce que** le dispositif de chauffage (14) est relié à une source de tension (104).

13. Système de distribution d'air (100) pour la climatisation d'un avion, comprenant une source d'air (102) conçue pour assurer de l'air d'alimentation, au moins une sortie d'air (106) conçue pour fournir l'air d'alimentation à une zone de température (107), et au moins un dispositif de distribution d'air (10) selon l'une des revendications 1 à 12,
dans lequel le dispositif de distribution d'air (10) est disposé entre la source d'air (102) et la sortie d'air (106) pour fournir l'air d'alimentation à la sortie d'air (106).

14. Système de distribution d'air (100) selon la revendication 13, **caractérisé en ce qu'**une pluralité de tubes de distribution d'air (12) avec et sans dispositif de chauffage (14) sont connectés en série et reliés entre eux.

15. Procédé de fabrication d'un tube de distribution d'air (12) d'un dispositif de distribution d'air (10) selon l'une des revendications 1 à 12, comprenant les étapes suivantes consistant à :
a) produire un tube de distribution d'air (12) stratifié à section transversale d'écoulement libre, comprenant une couche intérieure (136) constituée d'un produit semi-fini préimprégné renforcé de fibres de verre, une couche d'élément chauffant (16) électrique, une couche d'isolation thermique (140) constituée d'une couche de structure en nid d'abeilles, et une couche extérieure (138) constituée d'un produit semi-fini préimprégné renforcé de fibres de verre ; et
b) faire durcir le tube de distribution d'air (12) produit selon l'étape a), et simultanément mettre sous vide la couche de structure en nid d'abeilles (152) dans un autoclave.
